(19)

Europäisches Patentamt
European Patent Office
Office européen des brevets

(11) **EP 3 082 009 B1**

(12) **EUROPEAN PATENT SPECIFICATION**

(45) Date of publication and mention of the grant of the patent:
**04.09.2019  Bulletin 2019/36**

(51) Int Cl.:
*G05D 16/06* *(2006.01)*   *G05D 16/02* *(2006.01)*

(21) Application number: **16153656.0**

(22) Date of filing: **01.02.2016**

(54) **PRESSURE REGULATOR**

DRUCKREGLER

RÉGULATEUR DE PRESSION

(84) Designated Contracting States:
**AL AT BE BG CH CY CZ DE DK EE ES FI FR GR HR HU IE IS IT LI LT LU LV MC MK MT NL NO PL PT RO RS SE SI SK SM TR**

(30) Priority: **20.02.2015  GB 201502896**

(43) Date of publication of application:
**19.10.2016  Bulletin 2016/42**

(73) Proprietor: **The West Group Limited
Waterlooville, Hampshire PO7 7XJ (GB)**

(72) Inventors:
• **Leng, John Leslie
  Havant, Hampshire PO9 2UQ (GB)**

• **Meagher, Adrian John
  Waterlooville, Hampshire PO7 5LL (GB)**

(74) Representative: **Sturt, Clifford Mark
Brockwood Services LLP
Unit 4 Bridge Farm
Botley Road
Curbridge, Hampshire SO30 2HB (GB)**

(56) References cited:
**DE-U1- 29 708 831      GB-A- 563 208
GB-A- 1 403 785        US-A- 2 359 111
US-A1- 2005 263 189**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD

This invention relates to a pressure regulator for controlling fluid pressure. Particularly, but not exclusively, the invention pertains to miniature pressure regulators for medical devices.

BACKGROUND

Pressure regulators for use in medical devices such as a gas delivery system often require high accuracy of the regulated output pressure. In recent years there has been a move towards miniaturisation and weight reduction of medical devices including devices using pressure regulators to allow for increased convenience and portability. Accordingly there have been attempts to produce miniature pressure regulators to satisfy these size and weight requirements including single stage regulators for use with supply pressures of typically 4 - IObar, producing a reduced regulated output pressure. Such single stage miniature pressure regulators may also have applicability in scientific equipment and high precision industrial machinery.

"Pressure droop" is a characteristic seen in known regulators whereby the pressure at the regulator outlet falls, deviating away from the set point pressure as the flow rate through the regulator is increased.

In seeking to reduce the size of pressure regulators the size often has to be compromised to achieve the required regulator performance particularly for increased flow capacity and the reduction of outlet "pressure droop" - typically by increasing the size of regulator to achieve the performance requirement. Another problem in known pressure regulators is: if a significant leak path occurs in the regulator diaphragm, the outlet fluid pressure is likely to increase to a level well above the set outlet pressure. The present invention seeks to provide a solution to one or more of these problems.

Document US 2005/263189A1 discloses a pressure regulator having primary and secondary regulating valves wherein the characteristics of the secondary valve against fluctuations in primary pressure are reverse to that of the primary valve.

Document DE 29708831U1 discloses a regulator provided with a control valve which is housed in a valve receptacle such that flow through the valve does not impinge upon the upstream end of the control valve.

Document GB1403785A discloses a fluid flow control device in which a curved tube feeds fluid from the outlet back to a control chamber whereby pressure at the outlet can be regulated.

Document US 2359111A discloses fluid pressure regulator which is provided with a supplemental valve which acts to stop flow through the regulator when the inlet pressure drops below a predetermined minimum.

Document GB 563208A discloses an automatic pressure actuated needle valve wherein the needle has a variation in cross-section to form double opposite tapers used to regulate flow through the valve.

SUMMARY

According to the present invention there is provided a pressure regulator, said pressure regulator comprising a housing containing a channel arranged to communicate a fluid from a fluid inlet to a fluid outlet, said channel comprising a valve seat housing, a valve seat and closure member with said closure member operable with the valve seat and valve seat housing to control flow through the channel; wherein the housing comprises a resilient diaphragm in fluid communication with the fluid and in physical communication with the closure member such that the diaphragm is operable to deform in response to a change in pressure of the fluid and such that deformation of the diaphragm causes the closure member to change position, wherein the housing comprises a resilient diaphragm in fluid communication with the fluid and in physical communication with the closure member such that the diaphragm is operable to deform in response to a change in pressure of the fluid and such that deformation of the diaphragm causes the closure member to change position, and the section of the diaphragm not in fluid communication with the channel, is in fluid communication with the exterior of the regulator via a vent aperture and;

wherein that the closure member comprises an upstream valve element and downstream valve element, wherein the downstream valve element is a ridge operable with an aperture in the valve seat housing to at least partially control fluid flow, wherein said ridge of the closure member is partially or fully inside said aperture in the valve seat housing when the upstream valve element of the closure member is at or between the fully open position and a predetermined partially open position with the valve seat,to provide a restriction to fluid flow but not to fully obstruct flow;

characterised in that, in the event of fluid leakage flow above a predetermined magnitude through the diaphragm to the exterior of the regulator via the vent aperture, the maximum difference between the fluid outlet pressure and the pressure at exterior of regulator is limited to a proportion of the difference between the fluid inlet pressure and the pressure at the exterior of the regulator, the said proportion being substantially determined by a predetermined calculation using;

the effective fluid metering area of the restriction defined by the path between the ridge of the downstream valve element of the closure member and the aperture in the valve seat housing when the ridge is fully or partially inside the said aperture and;

the effective fluid metering area of the vent aperture.

Preferably the downstream valve element of the closure member provides a partial restriction to flow when the upstream valve element of the closure member is at or at between approximately 60% of fully open position and the 100% fully open position (fully open).

The exterior of the said pressure regulator is in communication with the side of the diaphragm that is not wetted by the fluid being controlled by the regulator via a vent aperture in the diaphragm enclosure attached to the regulator housing with a cross sectional area "A". Preferably, the said vent aperture is dimensioned to provide said area "A" that is equivalent to an orifice that can pass the full rated fluid flow of the regulator with a pressure differential across said orifice not exceeding 0.5bar.

Thus, in the event of a diaphragm failure whereby a leak path occurs in the diaphragm such that the movement of the diaphragm along the movement axis of the closure member is not obstructed, the regulator will limit pressure at the fluid outlet in one of three modes: -

a) For of a small leak path (leak path area less than approximately 50% of vent aperture area "A") through the diaphragm the regulator will behave substantially as for a healthy diaphragm - with the diaphragm movement causing the upstream valve element of the closure member to regulate outlet pressure but with reduced accuracy.

b) For a large leak path (larger than approximately 150% of the vent aperture area "A") the pressure at the fluid outlet will be substantially limited by the restriction between the downstream valve element of the closure member and an aperture in the valve seat housing, the said downstream valve element being partially or fully inside said aperture as the partial loss of effective diaphragm area and also continual fluid leakage to the exterior causes movement of closure member such that the upstream valve element of the closure member is in the 60-100% open region. The clearance between the downstream valve element of the closure member and the aperture of the valve seat housing provides restriction to fluid flow.

c) For a diaphragm leak size between the conditions described above in a) and b) the mode of outlet port pressure regulation may transition between condition a) and condition b).

The use of a valve closure member, a valve seat and valve seat housing to provide two valve elements, wherein each valve element provides the dominant restriction and control of fluid flow over different portions of the closure member stroke and therefore the diaphragm stroke, is a low cost and compact method of limiting outlet port pressure in the event of a leak path occurring in the diaphragm where the diaphragm movement along the movement axis of the closure member is not obstructed.

The downstream valve element of the closure member and the valve seat housing aperture can be dimensioned to obtain a predetermined maximum pressure limit of the fluid outlet required in the event of a "large" leak path in the diaphragm occurring (as described above), the said downstream valve element being active when the closure member moves to the 60%-100% stroke position. For example if the fluid outlet maximum pressure limit required is 50% of the regulator fluid inlet pressure then the effective restriction area between the downstream valve element of closure member and the valve seat housing aperture will need to be approximately equal to the area of the vent aperture area "A."

If the outlet maximum pressure limit required is 20% of the inlet pressure then the effective restriction area between the downstream valve element of the closure member and the aperture of the valve seat housing will need to be approximately 50% of the vent aperture area "A."

This aspect of the invention for limiting fluid outlet pressure in the event of a large leak path occurring in diaphragm is applicable to components being dimensioned to limit the outlet port pressure to a proportion of the difference between regulator inlet pressure and the exterior pressure: within the range of preferably 20% to 80%.

Beneficially, the pressure regulator comprises a deflection member located in the channel that is arranged to deflect fluid flowing in downstream direction in the channel such that the closure member is shielded to substantially prevent fluid flow that is generally parallel with the movement axis of the closure member, from impinging on surfaces of the closure member that are upstream of the valve seat.

Preferably, the deflection member deflects fluid around the closure member such that fluid is directed to the valve seat via apertures or slots in the deflection member in a generally symmetric manner in a plane substantially perpendicular to the movement axis of the closure member. By this approach, the use of the deflection member to provide shielding, allows the magnitude of forces urging the closure member towards the valve seat along the movement axis of the closure member to be reduced, thereby reducing the outlet pressure droop. This reduction in pressure droop in turn allows the flow capacity of the pressure regulator to be increased.

The use of such a deflection member allows for a compact configuration of pressure regulator. The structural approach of providing a deflection member in this way facilitates a low-cost manufacturing approach while providing reduction of outlet pressure droop.

In some examples, the movement axis of the closure member may be substantially coaxial with the fluid inlet. Additionally or alternatively, the deflection member may be located in the channel proximate to the fluid inlet. Such a configuration allows for a compact configuration of pressure regulator.

Beneficially, the pressure regulator further comprises a hollow member located in the channel and the stem of said hollow member defines a narrow path between the stem and the channel in a region proximate to the fluid outlet, such that fluid passing through the channel is communicated from the fluid inlet to the fluid outlet via said narrow path. The outside profile of the stem of the hollow member may be one of several forms - it may have a portion which is generally tapered or curved to provide a gradual reduction in the cross-sectional area of the narrow path between the outside of the stem and the channel or it may have a cylindrical portion. The Venturi effect of fluid moving at a higher velocity through the narrow path between the stem of the hollow member and the channel then entering the slower moving fluid in the channel towards the fluid outlet results in reduced pressure which is transferred to the diaphragm via the inside passage in the hollow member.

This approach, of the diaphragm sensing the reduced pressure produced by the Venturi effect of flow exiting the narrow path formed between the stem of the hollow member and the channel, helps to partially compensate for fluid pressure drop through the regulator between the downstream side of the valve seat and the regulator outlet wherein the communication of the said reduced pressure to the diaphragm urges movement of the diaphragm in the direction that tends to increase the opening between the closure member and valve seat, thereby reducing outlet pressure droop. The provision of the hollow member has proved satisfactory in reducing regulator outlet pressure droop. This reduction of pressure droop in turn allows the flow capacity of the pressure regulator to be increased. Furthermore, sampling the pressure near to the fluid outlet with the sensing end of the stem of the hollow member at or near to the centre region of the outlet channel cross-section, allows a fast response of the pressure regulator to be obtained in response to changes in the regulator fluid inlet pressure or change in flow to the fluid outlet.

It has been found that the use of such a hollow member in the configuration described provides a regulator with good or low hysteresis and good repeatability of outlet fluid pressure.

Furthermore, the use of such a hollow member allows for a compact configuration of pressure regulator. The structural approach of providing a hollow member in this way facilitates a low-cost manufacturing approach while providing reduction of outlet pressure droop.

In some examples, the longitudinal axis of the hollow member may be substantially parallel with the axis of movement of the regulator closure member.

Alternatively, the longitudinal axis of the hollow member may be substantially perpendicular to the axis of movement of the closure member. Such a configuration allows for a compact configuration of pressure regulator, as well as allowing for simplified assembly. In some examples, the regulator may comprise a plurality of hollow members. The use of multiple hollow members enables increased flow through the regulator - provided that the flow capacity is not limited by other limiting flow areas in the flow path through the regulator.

In some examples, the closure member maybe an elongate element. Such a structure allows the closure member to be in physical communication with the diaphragm element in a simplified manner while at the same time being operable to open and close the channel.

In some examples, the fluid inlet may be substantially parallel to the fluid outlet.

Alternatively, the fluid inlet may be substantially perpendicular to the fluid outlet. Such a configuration allows for a compact configuration of pressure regulator.

In some examples, the regulator may comprise a bias spring to bias the closure member into abutting the diaphragm. Such a structure allows the closure member to remain in physical communication with the diaphragm and to apply a force to the diaphragm. Furthermore such a configuration allows for physical contact to be maintained in a manner which simplifies manufacture and/or assembly.

In some examples, the closure member may be fixedly attached to the diaphragm. Such a configuration allows the closure member to remain in physical communication with the diaphragm and allows the application of a bias force to the closure member acting towards the diaphragm to be avoided. In some examples, the closure member may be removably attached to the diaphragm. Such a configuration allows the closure member to remain in physical communication with the diaphragm and allows the application of a bias force to the closure member acting towards the diaphragm to be avoided. Furthermore such a configuration allows the removability of the closure member such that it can be replaced for repair.

In some examples, the diaphragm may be biased by a force acting on the diaphragm by a diaphragm load spring to urge the diaphragm and therefore the closure member towards a position that provides an opening between the closure member and the valve seat. Such a structure allows a force to be applied to the diaphragm through the selection of the spring stiffness and length and the magnitude of spring compression.

In some examples, the regulator may comprise an adjustment mechanism which is operable to adjust the compression of the diaphragm load spring such that the force acting on the diaphragm by the diaphragm load spring can be varied. Such a structure allows for an end user to adjust the fluid output pressure.

In some examples, a section of the diaphragm which is not in fluid communication with the channel may have a fluid communication path to the exterior of the pressure regulator to the exterior environment. Such a structure allows for fluid pressure on the channel side of the diaphragm to be referenced to the exterior pressure. In some examples, the pressure of a pressurised control fluid acting on the side of the diaphragm which is not in contact with the channel may be adjusted to vary the force of the pressurised control fluid acting on the diaphragm. Such a configuration allows an end user to adjust the regulator fluid outlet pressure.

In some examples, the fluid pressure at the fluid outlet may be determined by a net spring force acting on the diaphragm. Such a configuration allows for the fluid outlet pressure to be predetermined in a simplified manner without the need for elements other than the diaphragm and those producing a force on the diaphragm to be adjusted.

In some examples, the net force acting on the closure member may comprise two or more forces selected from the group comprising: the restoring force of the resilient diaphragm itself; a force applied through the closure member by the bias spring; the force applied by the diaphragm load spring; and the force applied by a pressurised control fluid. Such a configuration allows for the pressure regulator to be adjusted by adjusting the force acting on the diaphragm from one or more of the elements making up the net force. Furthermore such a configuration allows for pressure regulators to be used for a wide range of applications.

In some examples, the pressure regulator may be a non-relieving pressure regulator. Such a configuration allows for fluid wastage to be reduced and allows for the release of potentially dangerous fluids to be reduced.

In some examples, the pressure regulator may be a relieving pressure regulator. Such a configuration allows the relief of excess pressure above a set point in the event of induced pressure from a system or device connected to the regulator outlet

In some examples, the wetted components of the pressure regulator may be suitable for use with medical gases. Such a configuration allows such pressure regulators to be used for a wide range of applications, in particular for use in medical applications.

Some examples provide a multi-stage pressure regulator wherein at least one stage of the multi-stage pressure regulator is a regulator according to the invention.

BRIEF DESCRIPTION OF DRAWINGS

Embodiments of the present invention will now be described in greater detail with reference to the accompanying drawing in which:

Figure 1a shows an end view of a pressure regulator;
Figure 1b shows a lengthwise cross-section through the pressure regulator shown in Figure 1a;
Figure 1c shows an enlarged portion of the cross-section through the pressure regulator shown in Figure 1b;
Figure 2a shows a lengthwise cross-section through a pressure regulator;
Figure 2b shows an enlarged portion of the cross-section through the pressure regulator shown in Figure 2a;
Figure 3a shows a lengthwise cross-section through the pressure regulator shown in Figure 3c;
Figure 3b shows an enlarged portion of the cross-section through the pressure regulator shown in Figure 3a;

Figure 3c shows an end view of the pressure regulator shown in Figure 3a;
Figure 3d shows an enlarged portion of the cross-section through the pressure regulator shown in Figure 3f;
Figure 3e shows a lengthwise view of the pressure regulator shown in Figure 3a;
Figure 3f shows a lengthwise partial cross-section through the pressure regulator shown in Figure 3e;
Figure 4 shows a lengthwise cross-section through a pressure regulator;
Figure 5 shows a lengthwise cross-section through a pressure regulator;
Figure 6a shows a lengthwise cross-section through a pressure regulator;
Figure 6b shows an enlarged portion of the cross-section through the pressure regulator shown in Figure 6a showing the closure member in 65% stroke position;
Figure 6c shows a schematic diagram of the equivalent circuit for the pressure regulator in Fig 6a - except with a large leak path to the exterior via the diaphragm and vent aperture; and
Figure 6d shows an enlarged portion of the cross-section through the pressure regulator shown in Figure 6a showing the closure member in approximately the "maximum" regulator flow rate position.

DETAILED DESCRIPTION

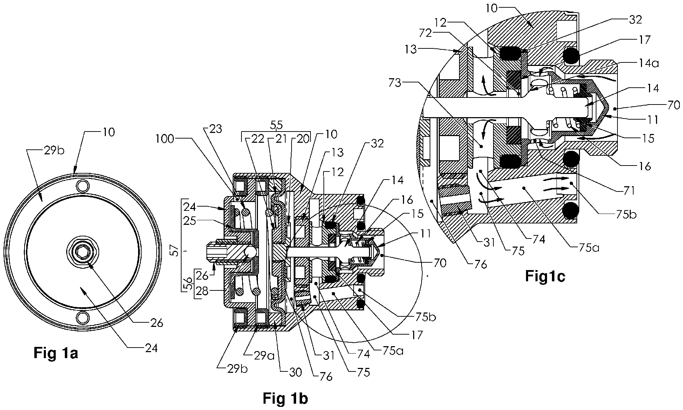

A pressure regulator is illustrated in Figures 1a-1c. The pressure regulator shown in figures 1a - 1c has a main body 10, into which is assembled a valve structure that includes a movable closure member 14 (also known, for example, as a valve poppet), a valve seat 17 and a valve seat housing 12. The valve seat housing 12 is dimensioned to receive valve seat 17 which in the present example is an elastomeric flat disc with an aperture. The closure member 14 is movable under action of the regulator mechanism described below to move along a movement axis so as to in one position cause obstruction of a fluid path and in other positions provide restriction to the fluid path.

To allow the fluid path to be opened, the closure member 14 is moved to a position where a gap is provided between the aperture of the valve seat 17 and the closure member 14 such that the fluid path is open.

In the structure illustrated in Figures 1a-1c, the closure member 14 is assembled into the pressure regulator by way of being inserted into a receiving structure of the main body 10 along with a closure member housing 11, a bearing 15, a bias spring 16, the closure member 14, the valve seat 17, a valve seat housing 12, and a retainer 13. The bore in the retainer 13 and the bore in the bearing 15 are dimensioned to slidably receive the closure member to provide guidance for the closure member along an axis coaxial with the valve seat and valve seat housing. The bias spring 16 registers against a shoulder on the closure member 14 and against a shoulder on the bearing 15 to provide an urging or biasing force acting on the closure member 14 towards the valve seat 17. The retainer 13 has a threaded portion that engages with the main body 10 and is torque tightened to secure the valve seat housing 12, the valve seat 17, the closure member 14, the bias spring 16, the bearing 15 and the O ring seal 32 in position in the main body 10. The structure of the main body 10 together with the retainer 13 and the orifice plug 31 provides a partition between the main fluid path and the diaphragm. The chamber between the said partition and diaphragm is referred to as the diaphragm chamber 76. Fluid communication between the main fluid path of the regulator and the diaphragm chamber is provided by the orifice in the orifice plug 31 and also the significantly smaller fluid connection provided by the clearance between the closure member 14 and the bore of retainer 13. The closure member housing or deflection member 11 is shaped so as to cause fluid to be deflected around the closure member housing 11 and to enter the inside of the closure member housing 11 into the region where the closure member 14 engages with the valve seat 17, via apertures or slots 71 in the closure member housing 11, in a plane substantially perpendicular to the movement axis of closure member 14.

In the arrangement illustrated in Figs 1b and 1c, the closure member 14 has a conical portion which is referred to as ridge 14a. The presence of the ridge 14a allows an opening between the closure member 14 and the valve seat 17 to be at or between fully open and closed positions by movement of the closure member 14 along its movement axis. Movement of the ridge 14a to a closed position will close a fluid path through the regulator and movement of the ridge 14a away from such a closed position will open the fluid path through the regulator. The arrangement of these assembled elements is shown in Figure 1b and in an enlarged view in Figure 1c.

The diaphragm in the present example 21 is formed from a flexible or resilient material such as a moulded elastomer. The diaphragm 21 can be preassembled so as to be sandwiched between a stud 20 and a spring cup 22 by torque tightening the stud 20 into the spring cup 22 to form a diaphragm subassembly 55.

The diaphragm subassembly 55 is installed in the body 10 such that the stud 20 engages with the closure member 14. The engagement between the stud 20 and the closure member 14 is provided by locating the closure member 14 into a recess formed in the stud 20. In alternative arrangements, the closure member may be engaged with and/or retained to the stud 20 by providing a gripping engagement of some form, such as by using threaded engagement, barbed engagement or clip. The diaphragm assembly 55 is assembled into position using a non-threaded grip ring 30 which in turn has a clamp force applied thereto by torque tightening clamp ring 29a.

The illustrated arrangement uses a load spring 23 arranged to provide a biasing or load force to the closure member 14 acting counter to the bias spring 16 by application of force via the diaphragm subassembly 55 onto the closure member 14.

To provide an acting surface against which the load spring can act, and to provide for adjustment in the net load force according to the present example, a spring guide 25 is fitted to an internal spigot in an adjuster housing 24 which is itself mounted to the main body 10. The fit between the spring guide 25 and the spigot of the adjuster housing 24 is a close clearance fit to provide for smooth, unrestricted movement of the spring guide 25 over the spigot. The load spring 23 is installed between the spring guide 25 and the spring cup 22. An adjuster 26 is threadedly received through an opening in the end of the spigot of the adjuster housing 24. A ball 28 is received into a hole on the end of the adjuster 26 using an interference fit to form an adjuster and ball subassembly 56. The adjuster and ball subassembly 56 can be wound in and out along the threaded engagement between the adjuster 26 and the spigot to provide for adjustment in the compression of the load spring 23 by causing movement of the spring guide 25.

An adjuster subassembly comprises the adjuster housing 24, a spring guide 25 and the adjuster and ball subassembly 56. The adjuster subassembly 57 is assembled into the main body 10 and the adjuster housing 24 is held in place into the receiving structure of the main body 10 by a torque tightened clamp ring 29b.

As illustrated, the load spring 23 side of the diaphragm 21 is vented to exterior pressure via a vent hole 100 in the adjuster housing 24. The bias spring 16 urges the closure member 14 towards the diaphragm stud 20 thereby obtaining physical communication with diaphragm subassembly. The net spring force acting on the diaphragm is the load spring 23 force minus the bias spring force provided by spring 16.

The fluid flow through the pressure regulator illustrated in Figures 1a to 1c will now be discussed. In use, a fluid enters the pressure regulator from a fluid source connected to the regulator at fluid inlet 70. The fluid path is deflected around the closure member housing 11. The upstream end of the closure member housing 11, which is directed towards the incoming fluid proximate to the inlet of regulator has, in the present example, a conical shape. In other examples, the end of the closure member housing 11 may have a domed shape, a frustoconical shape or a flat profile with chamfers or the like. The fluid path then passes between the annulus formed by the bore (receiving structure) of main body 10 and the closure member housing 11 and into the chamber inside the closure member housing 11 through radial holes or slots 71 in the closure member housing 11.

To set the pressure regulator with the desired outlet pressure set below the pressure of fluid supplied to the regulator inlet; the set screw 26 is adjusted to obtain a net load force acting on the closure member 14 via the load spring 23 and diaphragm subassembly 55 which urges the valve closure member 14 to provide an opening 72 with the valve seat 17 and to allow fluid to flow from the inside of the deflection member 11 through to the radial holes or slots 73 in the valve seat housing 12, into the gallery 74, then to position 75, then into a passage 75a connecting to the fluid outlet 75b. Pressure feedback to the diaphragm chamber 76 is substantially provided by communication of fluid pressure from the fluid path at position 75 near the entry to the outlet passage 75a to the diaphragm chamber via the aperture in orifice plug 31. Fluid pressure in the diaphragm chamber 76 will increase until the force applied by fluid pressure and the closure member 14 acting on the diaphragm subassembly 55 is sufficient to move the diaphragm subassembly 55 to a position towards the left hand side of Fig 1b such that the total force applied towards the left balances with the net load force acting on the diaphragm towards the right. This balance position of the diaphragm subassembly, and therefore the closure member 14, occurs when the opening 72 between the closure member 14 and the valve seat 17 is of a size that provides the required reduction in fluid pressure from the inlet pressure to obtain a pressure acting on the diaphragm at which there is force balance with the net load force. The pressure regulator therefore operates depending upon the outlet pressure to open or close the opening 72 by movement of the closure member 14 such that the ridge 14a blocks or provides a variable restriction to the flow path through valve seat 17. The feedback pressure control enables the regulator to self-regulate to a set outlet pressure. The set outlet pressure can be adjusted using the adjuster 26 to vary the net load force acting on the diaphragm.

By providing the configuration shown in Figures 1a-1c and as discussed above, using a deflection member to avoid direct impingement of incoming fluid flow on the closure member in a direction substantially parallel with the movement axis of the closure member, a compact design of pressure regulator can be produced having a high maximum fluid flow throughput.

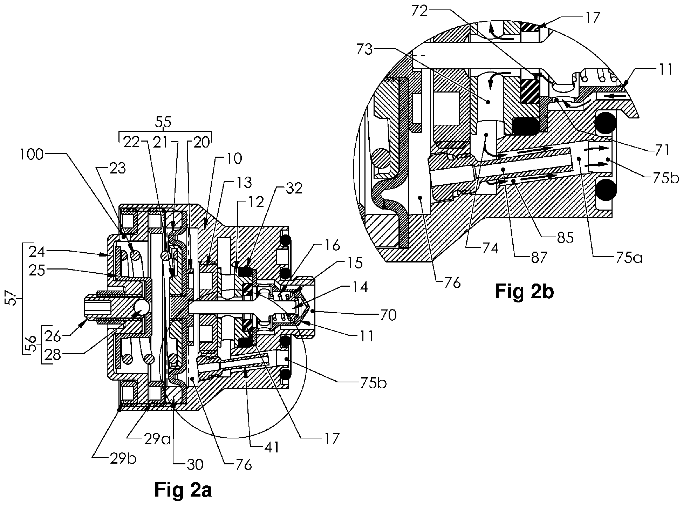

A variation of the regulator is illustrated in Figures 2a, 2b. The pressure regulator shown in Figures 2a and 2b has a main body 10 into which the component parts of the pressure regulator are assembled as for the example shown in Figures 1a-1c. The operation of the closure member housing 11, seat housing 12, retainer 13, closure member 14, bearing 15, bias spring 16, valve seat 17, diaphragm sub assembly 55, and adjuster subassembly 56, are similar to the corresponding arrangements described above with reference to Figures 1a-1c.

The main difference between the pressure regulator of this example and the regulator of the earlier example above is in the method and structure by which the diaphragm chamber senses the pressure of the fluid proximate to the regulator outlet. According to the arrangement shown in figures 2a-b, a hollow member 41 is assembled to the main body 10 (in a similar location to the orifice plug in the example shown in Fig 1b). The hollow member 41 is mounted in the wall between the diaphragm chamber 76 and the channel 75, with the stem of the hollow member 41 located in the transfer passage 75a. The hollow member 41 is assembled into the main body 10 by torque tightening a shouldered head of the hollow member 41 into a counterbore of a threaded hole in the main body 10, similar to the hole through which the orifice plug is fitted in the earlier example above.

As with the above arrangements shown in Figures 1a-1c, in-use, a fluid path through the regulator starts at fluid inlet 70, is deflected by the closure member housing 11 and passes between the annulus formed by the bore of main body 10 and the closure member housing 11. The fluid path enters into the chamber inside closure member housing 11 through radial holes or slots 71 in the closure member housing 11.

When the pressure regulator is, at least, partially open fluid passes through opening 72 provided by the valve seat 17 and the ridge 14a of the closure member 14. When the pressure regulator is fully closed, for example when the set pressure is set to zero fluid outlet pressure, opening 72 is closed off by valve seat 17 and the ridge 14a of closure member 14.

After passing through the opening 72, the fluid path emerges through radial holes or slots 73 disposed around the axis of the valve seat housing 12. The fluid flow through the plurality of radial holes/slots 73 in the valve seat housing 12 flows into the gallery 74 and exits the gallery through a passage 85 formed between the outside surface of the stem of hollow member 41 and a transfer passage 75a. Fluid exits the passage 85 to emerge into the transfer passage at 75a. The cross-sectional area of transfer passage 75a is larger than that of passage 85 resulting in higher velocity fluid entering slower velocity fluid at 75a with the associated reduction in pressure at 75a caused by the Venturi effect. The pressure at 75a is transferred to the diaphragm 21 via passage 87 through the inside of the hollow member 41 and the diaphragm chamber 76. The fluid flow path continues from the transfer passage 75a to the fluid outlet 75b.

The method of sensing or transferring pressure proximate to the outlet of the regulator by use of the hollow member provides partial pressure compensation for the pressure drop between the downstream side of the valve seat and the regulator outlet. In other words it reduces the change in outlet port pressure for a change in flow through the regulator. This results in reduced pressure droop of the outlet pressure.

As illustrated, the stem of the hollow member 41 is circular in cross-section, but other cross-sections are contemplated. Also as illustrated, the passage 87 through the hollow member 41 is coaxial with the centreline axis of the hollow member 41, but other orientations of the passage through the hollow member are envisaged. The cross-sectional area of the passage 85 formed between the outside of the stem of the hollow member 41 and the transfer channel 75a can vary between the point at which flow enters the narrowed section passage and the point at which the flow exits the passage into the full cross section of the transfer passage.

The passage 85 cross section reduces in the direction of flow along the flow path by having a tapered outside profile of the stem of the hollow member 41 whilst installed in a cylindrical passage. In an alternative embodiment a hollow member with a cylindrical stem can be installed in a tapering transfer passage to provide a passage which gradually accelerates fluid as it flows through the passage formed between the stem of the hollow member and the transfer passage.

In an alternative arrangement both the transfer passage and the outside of the hollow stem can have a tapered portion to provide a passage which reduces in cross-section towards the downstream end of the hollow member.

In an alternative arrangement the cross-section of the passage between the outside of the stem of the hollow member and the transfer passage is substantially constant.

In other examples, the fluid connection from the gallery 74 to the start of the passage 85 past the hollow may be via a slot or aperture with a cross sectional area preferably equal to or larger than that of the cross-sectional area of the full transfer passage.

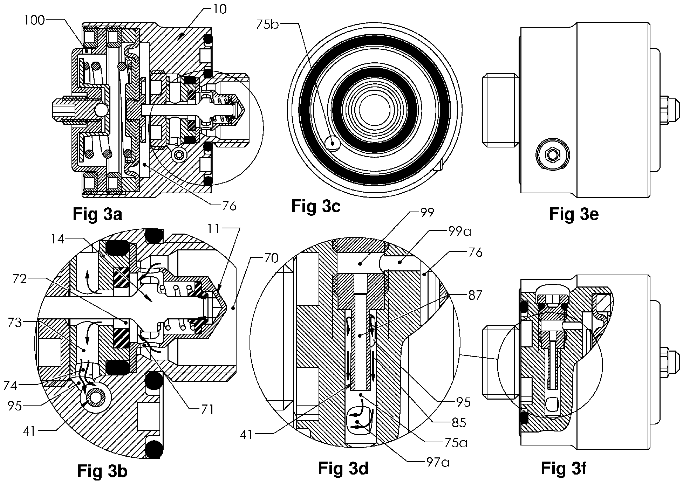

Figures 3a - 3f show a further example of a pressure regulator.

The arrangement shown in Figures 3a - 3f allows an even more compact construction than the example shown in Figures 2a - 2b. This is achieved by disposing the hollow member 41 in a direction substantially perpendicular to the movement axis of the closure member 14 as opposed to disposing the hollow member 41 in a direction generally parallel to the movement axis of closure member 14 as shown in Figures 2a - 2b.

The fluid path through the pressure regulator shown in Figures 3a - 3f is substantially similar to that described with reference to Figures 2a - 2b. The main differences being an additional transfer passage 97a, disposed on the fluid path between transfer passage 75a and fluid outlet 75b, additional transfer passages 99, 99a disposed on the fluid path between passage 87 and diaphragm chamber 76, and additional transfer passage 95 disposed on the fluid path between gallery 74 and passage 85. These additional transfer passages are included to allow for the disposal of the hollow member 41 in a direction substantially perpendicular to the movement axis of closure member 14. By arranging the hollow member 41 in this orientation, the size of the pressure regulator can be made smaller as there is no need to allow sufficient depth for the hollow member 41 to extend between gallery 74 and the fluid outlet 75b.

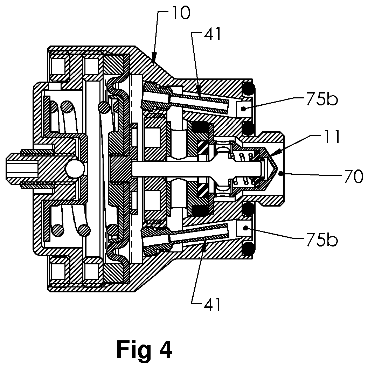

Figure 4 shows a pressure regulator according to another example. In this example, multiple fluid outlets 75b are provided, each having a corresponding hollow member 41. By providing the pressure regulator with more than one hollow member 41, the flow capacity of a regulator can be increased, unless or until the flow is limited by other limiting flow areas in the regulator flowpath.

The remainder of the structure and operation of the pressure regulator is the same as that described for Figure 2a - 2b except that the fluid outlet flow from the gallery 74 is divided between the plurality of outlet paths with the corresponding plurality of hollow members 41. In the present example, the plurality of fluid outlets 75b and corresponding plurality of hollow members are equally spaced around the axis of the pressure regulator to allow for a substantially symmetrical distribution of sensed pressures from the plurality of sensing positions downstream of the hollow members.

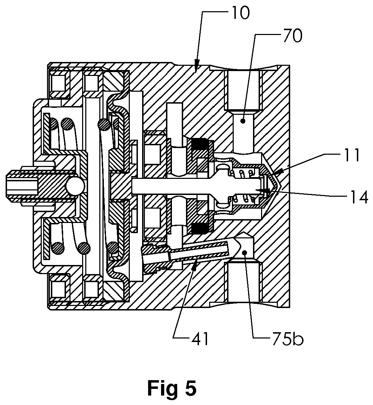

Figure 5 shows a pressure regulator according to a further alternative arrangement. The Figure shows an alternate arrangement where the fluid inlet and fluid outlet are substantially perpendicular to the movement axis of the closure member. In such an arrangement the deflection effect of closure member housing 11 is less pronounced than in the pressure regulator described with reference to Figures 1a - c. However, the closure member housing 11 will substantially prevent fluid impinging on the closure member in a direction parallel with the movement axis of the closure member.

In all of the examples shown in Figures 2 to 4 the pressure droop in the outlet pressure at location 75b in the regulators is reduced and the useable flow range is increased by the use of the hollow member and deflection member configuration.

For the regulator example shown in Fig 5 the hollow member and deflection member configuration reduces the droop in outlet pressure and increases the useable flow range, with the hollow member providing the main contribution to the reduction in droop in outlet pressure.

The use of the hollow member configuration described, allows for a compact design of pressure regulator with reduced droop in outlet pressure with a high maximum fluid flow throughput, particularly, but not exclusively, when used in a regulator which has a deflection member configuration to partially shield the closure member as described for the first aspect of the invention.

In an alternate embodiment of the regulators shown in Figs 1-5 the valve closure member can be a ball operating in conjunction with a piston with said ball serving as the closure member acting on valve seat 17 and said piston being dimensioned to slidably operate in the bore of retainer 13 such that the load spring 23 can transmit force to the ball closure member via the diaphragm subassembly 55. In this configuration one end of said piston is in physical contact with the ball and the other end is in physical contact with the diaphragm subassembly 55.

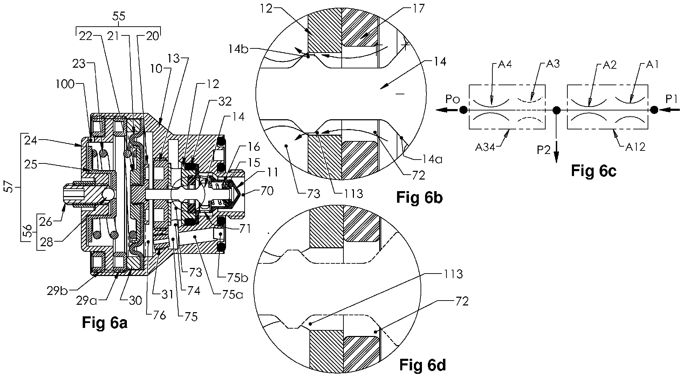

An embodiment of the present invention is illustrated in Figures 6a - 6d. The pressure regulator shown in Figures 6a - 6d has a main body 10 into which the component parts of the pressure regulator are assembled much as for the arrangement shown with reference to Figures 1a-1c. The operation of the closure member housing 11, a valve seat housing 12, a retainer 13, a closure member 14, a bearing 15, a bias spring 16, a valve seat 17, diaphragm assembly 55, and adjuster 26 are similar to the corresponding arrangements described above with reference to Figures 1a-1c.

The main difference between the pressure regulator of the invention and the regulator of the earlier arrangements is that the closure member 14 has two valve elements: an upstream valve element and a downstream valve element.

The upstream and downstream valve elements of the closure member may be of a variety of shapes. In the example shown in Figs 6a, 6b and 6d the upstream valve element is a conical poppet type valve element and the downstream valve element is a ridge type element. Alternatively for example, the upstream valve element can be a can be a poppet type element with a curved portion and the downstream valve element can be a ridge with notches or flat portions. In the present example the aperture in the valve seat 17 and the bore in the valve seat housing 12 are depicted as separate elements. Alternatively the valve seat and valve seat housing aperture to provide openings 72 and 113 can be a single contiguous element with a constant or varying cross section.

As with the above arrangements shown in Figures 1a-1c, the operating fluid enters a fluid inlet at 70, is deflected by the closure member housing or deflection member 11 and passes between the annulus formed by the bore of main body 10 and the closure member housing 11. The fluid path enters into the chamber inside closure member housing 11 through radial holes or slots 71 in the closure member housing 11. When the pressure regulator is at least partially open, fluid passes through opening 72 provided by the valve seat 17 and the upstream valve element 14a of the closure member 14. When the pressure regulator is fully closed, for example when the set pressure is set to zero fluid outlet pressure, opening 72 is closed off by valve seat 17 and the upstream valve element 14a of closure member 14. After passing through the opening 72 the fluid path then passes through opening 113 provided by the aperture in valve seat housing 12 and the ridge 14b of the downstream valve element of closure member 14 in the following manner:-

(1) Where the closure member 14 is between 60% and 100% stroke (where 0% stroke is defined as the position when opening 72 is closed by upstream valve element 14a, and 100% stroke as the position when opening 72 is fully open), the downstream valve element 14b is partially or fully inside the aperture in the valve seat housing 12 which restricts but does not completely obstruct the fluid path through opening 113. This situation is depicted in Figure 6b.

(2) Where the closure member 14 is between 0% and 60% stroke the downstream valve element 14b is clear of opening 113 such that the downstream valve element 14b does not restrict the fluid path through opening 113. This situation is depicted in Figure 6d. The range of stroke positions where the downstream 14b restricts the fluid path through opening 113 can be selected for particular applications by varying the size, shape and position of ridge 14b and the size and position of the bore of valve seat housing 12. For some applications the lower boundary of this stroke range may instead of 60% be greater or lower. Possible example values include 80%, 70%, 65%, 55%, 50%. After passing through the opening 113 the fluid path emerges through radial holes or slots 73 disposed around the axis of the seat housing 12. The fluid flow path through the plurality of radial holes/slots 73 in the seat housing 12 flows into the gallery 74 and exits the gallery outlet 75. The pressure at the gallery outlet 75 is transferred to the diaphragm chamber 76 via the passage in orifice plug 31. Finally the fluid path passes to fluid outlet 75b through a transfer passage 75a.

A worked illustration of the example pressure regulator as shown with reference to Figures 6a-6d is given below where the load spring 23 has been pre-adjusted for a 2 bar regulated pressure at the fluid outlet 75b.

When zero pressure is applied to the fluid inlet 70 and the outlet port pressure is zero the closure member 14 is at 100% stroke (opening 72 is fully open).

If 5 bar pressure is applied to fluid inlet 70, the fluid will initially pass through opening 72 and the restricted opening 113 since the closure member 14 is initially at 100% stoke. As the pressure in the diaphragm chamber 76 increases the closure member 14 moves towards the left in the orientation shown in Figure 6a and when it reaches the position just below 60% of stroke the downstream valve element 14b is no longer restricting the fluid path through opening 113. The pressure will then continue to increase in the diaphragm chamber 76 thus moving the closure member 14 further towards the left which increases the degree of restriction by the upstream valve element 14a of the fluid path though opening 72 whilst the opening 113 remains unrestricted. This will progress until a force balance is reached between the net load force acting on the diaphragm and the overall effect of the outlet fluid pressure acting on the diaphragm. This will occur at approximately the pre-adjusted pressure of 2 bar.

In the event of a large leak path in the diaphragm to the exterior via the vent aperture 100, which does not obstruct the movement of the diaphragm along the movement axis of the closure member, it is helpful to consider the flow paths and restrictions that exist in the regulator as shown in Figure 6c. A1 is defined as the equivalent orifice area of opening 72, A2 as the equivalent orifice area of opening 113, A12 as the equivalent orifice area of A1 and A2 in series, A3 as the equivalent orifice area of a leak path in a leaking diaphragm 21 (a healthy diaphragm will have A3 = 0), A4 as the equivalent orifice area of vent hole 100 and A34 as the equivalent orifice area of A3 and A4 in series.

The leak path will pass through A1, A2, A3 and finally A4 to the exterior of the pressure regulator.

For reference three pressures are shown in the flow path schematic in Fig 6c :-

PI : Fluid Inlet pressure
P2 : Fluid Outlet pressure
Po : Exterior pressure

In the event of a large leak path across the diaphragm 21 such that area A3 is approximately equal to or greater than 150% of area A4, the maximum outlet pressure 75b will be substantially determined by the exterior pressure plus the "pressure division" of the inlet pressure to exterior pressure drop across the restrictions A12 and A34.

As the pressure in the diaphragm chamber 76 drops, the closure member 14 will move to 60-100% stroke position (where the downstream valve element 14b restricts opening 113). In this position restriction A2 is the dominant restriction since A1 will be large in comparison with the restricted A2 and therefore A12 will be approximately equal to A2. Similarly as A3 is larger than A4, A34 is approximately equal to A4. Therefore the maximum pressure at fluid outlet 75b will be largely determined by the "pressure division" between A2 and A4.

For an example case where no fluid is consumed at the fluid outlet 75b, and where area A2 is taken as equal to A4, and the pressure at the fluid inlet 70 is set to 6 bar absolute, the exterior pressure is 1 bar absolute, then the pressure drop across A2 will be approximately equal to the pressure drop across A4. Accordingly the maximum pressure at the fluid outlet 75b will be equal to Exterior pressure plus 0.5 x (Inlet - Exterior pressure difference)

$$\text{i.e.} = 1 + 0.5(6\text{-}1) = 3.5 \text{bar absolute.}$$

In the case where some fluid is consumed at the fluid outlet 75b, the pressure at the fluid outlet 75b would become *lower* than the 3.5bar calculated above for the case with zero flow to the fluid outlet - thereby still providing an outlet pressure within the predetermined maximum pressure limit.

The equivalent orifice areas A2 and A4 can be designed to produce a desired "pressure division" between the pressure at the fluid inlet 70 and the pressure at the exterior to limit pressure at the regulator fluid outlet.75b. This can be achieved by varying the size, shape of downstream valve element 14b and the aperture of valve seat housing 12 for area A2. The vent aperture area A4 is dimensioned to give required area with the minimum allowable area being preferably equal to the area of an orifice that would give a fluid pressure drop of 0.5bar or less with 100% rated regulator flow passing through said orifice. By appropriate dimensioning of components to obtain the areas A2 and A4 needed for the required inlet-outlet-exterior pressure division, the maximum pressure delivered to the fluid outlet 75b in an emergency situation when a leak path in diaphragm occurs can be preset as a proportion of the inlet to exterior pressure above the exterior pressure. The proportion of inlet to exterior pressure difference delivered to the fluid outlet 75b relative to the pressure at the fluid inlet 70 can be set to a range of values. In some examples, the value could be approximately 20%, 30%, 40%, 50%, 60%, 70% or 80%.

In contrast, in the event of a large leak path through a diaphragm 21 as described above, in a pressure regulator which has no downstream valve element 14b, the closure member 14 would move such that opening 72 was open to an extent such that the pressure delivered to the fluid outlet 75b would be significantly above the set or desired outlet pressure.

Such pressures may damage equipment connected to the fluid outlet 75b and accordingly a pressure regulator as shown in Figures 6a-6d allows such a risk of damage to be reduced. Furthermore a pressure regulator as shown in Figures 6a-6d allows the leak path to the exterior of the pressure regulator to be reduced.

In the event of leak paths through the diaphragm to the exterior via the vent aperture that are smaller than approximately 50% of the vent aperture area A4, the regulator will behave substantially as a healthy diaphragm - with diaphragm movement causing the upstream valve element of the closure member to regulate the outlet pressure.

For leak path areas through the diaphragm having an area that is between the "Large" and "Small" leak path sizes described above, the mode of outlet pressure regulation may transition between the conditions described for small and large leak paths.

The above described concepts for producing a compact high throughput pressure regulator can be adapted to produce a pressure regulator with a variety of overall dimensions and flow capabilities. The above described concepts may also be used to provide a pressure regulating valve for the second stage of a two stage pressure regulator valve. However, it will also be appreciated that although the techniques described herein are suited to the provision of a compact miniature pressure regulator, such techniques may also be employed to make compact larger scale pressure regulators.

The above-described concepts for producing a compact high throughput pressure regulator can be adapted to produce a pressure regulator of either the relieving type (where excess downstream pressure is vented to the exterior of the pressure regulator) or the non-relieving type (where excess downstream pressure is not vented to the exterior of the pressure regulator).

Although various components discussed above are described as being assembled in a particular order or as being held in place by particular structures, a pressure regulator consistent with the present teachings can be constructed using a variety of orders and directions of assembly for the various components and a variety of securing elements and mechanisms can be deployed. As just one example, it will be apparent from the figures that the receiving structure formed in the main body is illustrated in such manner as to indicate that this receiving structure could be manufactured by milling the receiving structure from the main body with the cross-section tending to generally reduce along the axis of the receiving structure.

**Claims**

1. A pressure regulator, said pressure regulator comprising a housing containing a channel arranged to communicate a fluid from a fluid inlet (70) to a fluid outlet (75b), said channel comprising a valve seat housing (12), a valve seat (17) and closure member (14) with said closure member (14) operable with the valve seat (17) and valve seat housing (12) to control flow through the channel;

   wherein the housing comprises a resilient diaphragm (21) in fluid communication with the fluid and in physical communication with the closure member (14) such that the diaphragm (21) is operable to deform in response to a change in pressure of the fluid and such that deformation of the diaphragm (21) causes the closure member to change position, and the section of the diaphragm (21) not in fluid communication with the channel, is in fluid communication with the exterior of the regulator via a vent aperture (100) and;
   wherein the closure member (14) comprises an upstream valve element (14a) and downstream valve element (14b), wherein the downstream valve element is a ridge (14b) operable with an aperture in the valve seat housing (12) to at least partially control fluid flow, wherein said ridge (14b) of the closure member (14) is partially or fully inside said aperture in the valve seat housing (12) when the upstream valve element (14a) of the closure member (14) is at the fully open position or between the fully open position and a predetermined partially open position with the valve seat (17), to provide a restriction to fluid flow but not to fully obstruct flow;
   **characterised in that**, in the event of fluid leakage flow above a predetermined magnitude through the diaphragm (21) to the exterior of the regulator via the vent aperture (100), the maximum difference between the fluid outlet pressure and the pressure at exterior of regulator is limited to a proportion of the difference between the fluid inlet pressure and the pressure at the exterior of the regulator, the said proportion being substantially determined by a predetermined calculation using;

   the effective fluid metering area of the restriction defined by the path between the ridge (14b) of the downstream valve element of the closure member (14) and the aperture in the valve seat housing (12) when the ridge (14b) is fully or partially inside the said aperture (12) and;
   the effective fluid metering area of the vent aperture (100).

2. A pressure regulator as claimed in claim 1, **characterised by** the said upstream valve element (14a) being operable with the valve seat (17) to obstruct fluid flow in the fully closed position.

3. A regulator as claimed in claim 1 or in claim 2, **characterised in that** the downstream valve element (14b) of the closure member (14), the aperture in the valve seat housing (12) and the vent aperture (100) are dimensioned to predetermine a maximum limit of the fluid outlet pressure for the situation of fluid leakage flow above a predetermined magnitude through the diaphragm member (21) to the exterior of the regulator via the vent aperture (100).

4. A regulator as claimed in claim 3, **characterised in that** the ridge (14b) of the downstream valve element of the closure member (14) is partially or fully inside the aperture in the valve seat housing (12) to provide restriction to fluid flow when the fluid outlet pressure is below a predetermined value.

5. A regulator as in claim 4, **characterised in that** the upstream valve element (14a) of the closure member (14) is in the fully closed position when the fluid outlet pressure is above a predetermined value.

6. A pressure regulator as claimed in any preceding claim, **characterised in that** the regulator comprises a deflection member (11) located in the channel and arranged to deflect fluid flowing in the channel such that the closure member (14) is shielded to substantially prevent fluid, that is flowing generally parallel to the movement axis of the closure member (14), and in a downstream direction, from impinging on the portion of the closure member (14) that is upstream of the valve seat (17).

7. A pressure regulator as claimed in claim 6, **characterised in that** the deflection member (11) deflects fluid around the closure member (14) such that the fluid is directed to the valve seat (17) in a generally symmetric manner in a plane substantially perpendicular to the movement axis of the closure member (14).

8. A pressure regulator as claimed in any preceding claim, **characterised in that** a hollow member (41) having a stem is located in the channel such that the stem of said hollow member (41) defines a narrow path between the channel and the outside of said stem proximate to the fluid outlet (75b) such that fluid passing through the channel is communicated from the fluid inlet (70) to the fluid outlet (75b) via said narrow path such that the pressure of the fluid emerging from said narrow path into the channel is communicated to the diaphragm (21) via the inside of the hollow member (41).

9. A pressure regulator as claimed in claim 8, **characterised in that** the regulator comprises a diaphragm chamber (76) which abuts the diaphragm (21) and wherein the inside of the hollow member (41) is operable to communicate the fluid directly from the channel through a wall of the channel to the diaphragm chamber(76).

10. A pressure regulator as claimed in any preceding claim, **characterised in that** the closure member (14) comprises a ball and a piston, wherein said piston is in physical communication with the diaphragm (21) and said ball, such that said ball is operable with the valve seat (17) to obstruct flow through the channel in the closed position.

11. A pressure regulator as claimed in any preceding claim, **characterised in that** the diaphragm (21) is biased by a biasing means to urge the closure member (14) towards a position that provides an opening between the closure member (14) and the valve seat (17).

12. A pressure regulator as claimed in claim 11, **characterised in that** the said biasing means comprises a load spring (23) and wherein the regulator comprises an adjustment mechanism (26) which is operable to adjust the compression of said load spring (23), such that the force acting on the diaphragm (21) can be varied.

13. A pressure regulator as claimed in claim 11, **characterised in that** said biasing means comprises a pressurised control fluid which acts on a section of the diaphragm (21) which is not in fluid communication with the channel.

14. A pressure regulator as claimed in claim 13, **characterised in that** the pressure of the pressurised control fluid can be adjusted to vary the force of the pressurised control fluid acting on the diaphragm (21).

**Patentansprüche**

1. Druckregler, wobei der Druckregler ein Gehäuse umfasst, das einen Kanal enthält, der angeordnet ist, ein Fluid von einem Fluideinlass (70) zu einem Fluidauslass (75b) zu leiten, wobei der Kanal ein Ventilsitzgehäuse (12), einen Ventilsitz (17) und Verschlusselement (14) umfasst, wobei das Verschlusselement (14) mit dem Ventilsitz (17) und Ventilsitzgehäuse (12) betreibbar ist, um Fluss durch den Kanal zu steuern;

   wobei das Gehäuse eine elastische Membran (21) in Fluidverbindung mit dem Fluid und in physischer Verbindung mit dem Verschlusselement (14) so umfasst, dass die Membran (21) betreibbar ist, sich in Reaktion auf eine Druckveränderung des Fluids zu verformen, und sodass Verformung der Membran (21) das Verschlusselement veranlasst, die Position zu verändern, und der Abschnitt der Membran (21), der nicht in Fluidverbindung mit dem Kanal ist, in Fluidverbindung mit dem Äußeren des Reglers über eine Entlüftungsöffnung (100) ist, und;

   wobei das Verschlusselement (14) ein vorgelagertes Ventilelement (14a) und nachgelagertes Ventilelement (14b) umfasst, wobei das nachgelagerte Ventilelement eine Wulst (14b) ist, die mit einer Öffnung in dem Ventilsitzgehäuse (12) betreibbar ist, um Fluidfluss zumindest teilweise zu steuern, wobei die Wulst (14b) des Verschlusselements (14) sich teilweise oder vollständig innerhalb der Öffnung in dem Ventilsitzgehäuse (12) befindet, wenn das vorgelagerte Ventilelement (14a) des Verschlusselements (14) sich in der vollständig offenen Position oder zwischen der vollständig offenen Position und einer vorbestimmten teilweise offenen Position mit dem Ventilsitz (17) befindet, um eine Einschränkung des Fluidflusses bereitzustellen, den Fluss aber nicht vollständig zu blockieren;

   **dadurch gekennzeichnet, dass** in dem Fall eines Fluidleckflusses über einer vorbestimmten Größenordnung durch die Membran (21) zu dem Äußeren des Reglers über die Entlüftungsöffnung (100) die maximale Differenz zwischen dem Fluidauslassdruck und dem Druck an dem Äußeren des Reglers auf eine Proportion der Differenz zwischen dem Fluideinlassdruck und dem Druck an dem Äußeren des Reglers begrenzt ist, wobei die Proportion im Wesentlichen durch eine vorbestimmte Berechnung bestimmt wird unter Verwendung;

   des effektive Fluidmessbereichs der Begrenzung, definiert durch den Pfad zwischen der Wulst (14b) des nachgelagerten Ventilelements des Verschlusselements (14) und der Öffnung in dem Ventilsitzgehäuse (12), wenn die Wulst (14b) vollständig oder teilweise innerhalb der Öffnung (12) ist, und;

   des effektiven Fluidmessbereichs der Entlüftungsöffnung (100).

**2.** Druckregler nach Anspruch 1, **dadurch gekennzeichnet, dass** das vorgelagerte Ventilelement (14a) mit dem Ventilsitz (17) betreibbar ist, um Fluidfluss in der vollständig geschlossenen Position zu blockieren.

**3.** Regler nach Anspruch 1 oder Anspruch 2, **dadurch gekennzeichnet, dass** das nachgelagerte Ventilelement (14b) des Verschlusselements (14), die Öffnung in dem Ventilsitzgehäuse (12) und die Ventilöffnung (100) bemessen sind, um eine maximale Grenze des Fluidauslassdrucks für die Situation von Fluidleckfluss über einer vorbestimmten Größenordnung durch das Membranelement (21) zu dem Äußeren des Reglers über die Entlüftungsöffnung (100) vorzubestimmen.

**4.** Regler nach Anspruch 3, **dadurch gekennzeichnet, dass** die Wulst (14b) des nachgelagerten Ventilelements des Verschlusselements (14) teilweise oder vollständig innerhalb der Öffnung in dem Ventilsitzgehäuse (12) ist, um Begrenzung des Fluidflusses bereitzustellen, wenn der Fluidauslassdruck unter einem vorbestimmten Wert liegt.

**5.** Regler nach Anspruch 4, **dadurch gekennzeichnet, dass** das vorgelagerte Ventilelement (14a) des Verschlusselements (14) sich in der vollständig geschlossenen Position befindet, wenn der Fluidauslassdruck über einem vorbestimmten Wert liegt.

**6.** Druckregler nach einem der vorstehenden Ansprüche, **dadurch gekennzeichnet, dass** der Regler ein Ablenkelement (11) umfasst, das sich in dem Kanal befindet und angeordnet ist, Fluid, das in dem Kanal fließt, so abzulenken, dass das Verschlusselement (14) abgeschirmt ist, um im Wesentlichen zu vermeiden, dass Fluid, das im Allgemeinen parallel zu der Bewegungsachse des Verschlusselements (14) und in einer nachgelagerten Richtung fließt, auf den Abschnitt des Verschlusselements (14) trifft, das dem Ventilsitz (17) vorgelagert ist.

**7.** Druckregler nach Anspruch 6, **dadurch gekennzeichnet, dass** das Ablenkelement (11) Fluid um das Verschlusselement (14) so ablenkt, dass das Fluid zu dem Ventilsitz (17) auf eine im Allgemeinen symmetrische Weise in einer Ebene im Wesentlichen senkrecht zu der Bewegungsachse des Verschlusselements (14) gerichtet wird.

**8.** Druckregler nach einem der vorstehenden Ansprüche, **dadurch gekennzeichnet, dass** ein Hohlelement (41), das einen Schaft aufweist, sich so in dem Kanal befindet, dass der Schaft des Hohlelements (41) einen engen Pfad zwischen dem Kanal und der Außenseite des Schafts nahe an dem Fluidauslass (75b) so definiert, dass Fluid, das durch den Kanal läuft, von dem Fluideinlass (70) zu dem Fluidauslass (75b) über den engen Pfad so geleitet wird, dass der Druck des Fluids, der aus dem engen Pfad in den Kanal entsteht, über die Innenseite des Hohlelements (41) zu der Membran (21) geleitet wird.

**9.** Druckregler nach Anspruch 8, **dadurch gekennzeichnet, dass** der Regler eine Membrankammer (76) umfasst, die an die Membran (21) anliegt, und wobei die Innenseite des Hohlelements (41) betreibbar ist, um das Fluid direkt von dem Kanal durch eine Wand des Kanals zu der Membrankammer (76) zu leiten.

**10.** Druckregler nach einem der vorstehenden Ansprüche, **dadurch gekennzeichnet, dass** das Verschlusselement (14) eine Kugel und einen Kolben umfasst, wobei der Kolben so in physischer Verbindung mit der Membran (21) und der Kugel steht, dass die Kugel mit dem Ventilsitz (17) betreibbar ist, um Fluss durch den Kanal in der geschlossenen Position zu blockieren.

**11.** Druckregler nach einem der vorstehenden Ansprüche, **dadurch gekennzeichnet, dass** die Membran (21) durch ein Vorspannmittel vorgespannt ist, um das Verschlusselement (14) in Richtung einer Position zu drängen, die eine Öffnung zwischen dem Verschlusselement (14) und dem Ventilsitz (17) bereitstellt.

**12.** Druckregler nach Anspruch 11, **dadurch gekennzeichnet, dass** das Vorspannmittel eine Lastfeder (23) umfasst, und wobei der Regler einen Einstellmechanismus (26) umfasst, der betreibbar ist, um die Kompression der Lastfeder (23) so einzustellen, dass die Kraft, die auf die Membran (21) wirkt, variiert werden kann.

**13.** Druckregler nach Anspruch 11, **dadurch gekennzeichnet, dass** das Vorspannmittel ein druckbeaufschlagtes Steuerfluid umfasst, das auf einen Abschnitt der Membran (21) wirkt, der nicht in Fluidverbindung mit dem Kanal steht.

**14.** Druckregler nach Anspruch 13, **dadurch gekennzeichnet, dass** der Druck des druckbeaufschlagten Steuerfluids eingestellt werden kann, die Kraft des druckbeaufschlagten Steuerfluids, das auf die Membran (21) wirkt, zu variieren.

**Revendications**

**1.** Régulateur de pression, ledit régulateur de pression comprenant un logement contenant un canal agencé pour transmettre un fluide d'une entrée de fluide (70) à une sortie de fluide (75b), ledit canal comprenant un logement de siège de soupape (12), un siège de soupape (17) et un élément de fermeture (14), ledit élément de fermeture (14) ayant pour fonction avec le siège de soupape (17) et le logement de siège de soupape (12) de contrôler l'écoulement à travers le canal ;

dans lequel le logement comprend une membrane élastique (21) en communication fluidique avec le fluide et en communication physique avec l'élément de fermeture (14) de sorte que la membrane (21) a pour fonction de se déformer en réponse à un changement de pression du fluide et de sorte qu'une déformation de la membrane (21) entraîne un changement de position de l'élément de fermeture, et la section de la membrane (21) qui n'est pas en communication fluidique avec le canal, est en communication fluidique avec l'extérieur du régulateur via une ouverture d'aération (100) ; et

dans lequel l'élément de fermeture (14) comprend un élément de soupape en amont (14a) et un élément de soupape en aval (14b), dans lequel l'élément de soupape en aval est une crête (14b) ayant pour fonction avec une ouverture du logement de siège de soupape (12) de contrôler au moins partiellement l'écoulement de fluide, dans lequel ladite crête (14b) de l'élément de fermeture (14) est partiellement ou complètement à l'intérieur de ladite ouverture dans le logement de siège de soupape (12) lorsque l'élément de soupape en amont (14a) de l'élément de fermeture (14) se trouve au niveau de la position complètement ouverte ou entre la position complètement ouverte et une position partiellement ouverte prédéterminée avec le siège de soupape (17), pour assurer une restriction de l'écoulement de fluide mais pas pour obstruer complètement l'écoulement ;

**caractérisé en ce que**, dans le cas d'un écoulement de fuite de fluide supérieur à une ampleur prédéterminée à travers la membrane (21) vers l'extérieur du régulateur via l'ouverture d'aération (100), la différence maximale entre la pression de sortie de fluide et la pression à l'extérieur du régulateur est limitée à une proportion de la différence entre la pression d'entrée de fluide et la pression à l'extérieur du régulateur, ladite proportion étant sensiblement déterminée par un calcul prédéterminé utilisant ;

la zone de dosage de fluide effective de la restriction définie par le trajet entre la crête (14b) de l'élément de soupape en aval de l'élément de fermeture (14) et l'ouverture dans le logement de siège de soupape (12) lorsque la crête (14b) est complètement ou partiellement à l'intérieur de ladite ouverture (12) et ;

la zone de dosage de fluide effective de l'ouverture d'aération (100).

2. Régulateur de pression selon la revendication 1, **caractérisé en ce que** ledit élément de soupape en amont (14a) a pour fonction avec le siège de soupape (17) d'obstruer l'écoulement de fluide dans la position complètement fermée.

3. Régulateur selon la revendication 1 ou la revendication 2, **caractérisé en ce que** l'élément de soupape en aval (14b) de l'élément de fermeture (14), l'ouverture dans le logement de siège de soupape (12) et l'ouverture d'aération (100) sont dimensionnés pour prédéterminer une limite maximale de la pression de sortie de fluide pour la situation d'écoulement de fuite de fluide supérieur à une ampleur prédéterminée à travers l'élément de membrane (21) vers l'extérieur du régulateur via l'ouverture d'aération (100).

4. Régulateur selon la revendication 3, **caractérisé en ce que** la crête (14b) de l'élément de soupape en aval de l'élément de fermeture (14) est partiellement ou complètement à l'intérieur de l'ouverture dans le logement de siège de soupape (12) pour assurer la restriction de l'écoulement de fluide lorsque la pression de sortie de fluide est inférieure à une valeur prédéterminée.

5. Régulateur selon la revendication 4, **caractérisé en ce que** l'élément de soupape en amont (14a) de l'élément de fermeture (14) est dans la position complètement fermée lorsque la pression de sortie de fluide est supérieure à une valeur prédéterminée.

6. Régulateur de pression selon l'une quelconque des revendications précédentes, **caractérisé en ce que** le régulateur comprend un élément de déviation (11) situé dans le canal et agencé pour dévier le fluide s'écoulant dans le canal de sorte que l'élément de fermeture (14) est protégé pour empêcher sensiblement le fluide, qui s'écoule généralement parallèlement à l'axe de mouvement de l'élément de fermeture (14), et dans une direction aval, de venir frapper sur la partie de l'élément de fermeture (14) qui est en amont du siège de soupape (17).

7. Régulateur de pression selon la revendication 6, **caractérisé en ce que** l'élément de déviation (11) dévie le fluide autour de l'élément de fermeture (14) de sorte que le fluide est dirigé vers le siège de soupape (17) d'une manière généralement symétrique dans un plan sensiblement perpendiculaire à l'axe de mouvement de l'élément de fermeture (14).

8. Régulateur de pression selon l'une quelconque des revendications précédentes, **caractérisé en ce qu'**un élément creux (41) ayant une tige est situé dans le canal de sorte que la tige dudit élément creux (41) définit un trajet étroit entre le canal et l'extérieur de ladite tige à proximité de la sortie de fluide (75b) de sorte que le fluide passant à travers le canal est transmis de l'entrée de fluide (70) à la sortie de fluide (75b) via ledit trajet étroit de sorte que la pression du fluide émergeant dudit trajet étroit dans le canal est transmise à la membrane (21) via l'intérieur de l'élément creux (41).

9. Régulateur de pression selon la revendication 8, **caractérisé en ce que** le régulateur comprend une chambre à membrane (76) qui vient en butée avec la membrane (21) et dans lequel l'intérieur de l'élément creux (41) a pour fonction de transmettre le fluide directement du canal à travers une paroi du canal vers la chambre à membrane (76).

10. Régulateur de pression selon l'une quelconque des revendications précédentes, **caractérisé en ce que** l'élément de fermeture (14) comprend une bille et un piston, dans lequel ledit piston est en communication physique avec la membrane (21) et ladite bille, de sorte que ladite bille a pour fonction avec le siège de soupape (17) d'obstruer l'écoulement à travers le canal dans la position fermée.

11. Régulateur de pression selon l'une quelconque des revendications précédentes, **caractérisé en ce que** la membrane (21) est contrainte par un moyen de contrainte à presser l'élément de fermeture (14) vers une position qui fournit une ouverture entre l'élément de fermeture (14) et le siège de soupape (17).

12. Régulateur de pression selon la revendication 11, **caractérisé en ce que** ledit moyen de contrainte comprend un ressort de charge (23) et dans lequel le régulateur comprend un mécanisme d'ajustement (26) qui a pour fonction d'ajuster la compression dudit ressort de charge (23), de sorte que la force agissant sur la membrane (21) peut être modifiée.

13. Régulateur de pression selon la revendication 11, **caractérisé en ce que** ledit moyen de contrainte comprend un fluide de commande sous pression qui agit sur une section de la membrane (21) qui n'est pas en communication fluidique avec le canal.

14. Régulateur de pression selon la revendication 13, **caractérisé en ce que** la pression du fluide de commande sous pression peut être ajustée pour modifier la force du fluide de commande sous pression agissant sur la membrane (21).

**Fig 1a**

**Fig 1b**

**Fig1c**

**Fig 2a**

**Fig 2b**

**Fig 3a**

**Fig 3b**

**Fig 3c**

**Fig 3d**

**Fig 3e**

**Fig 3f**

**Fig 4**

**Fig 5**

**Fig 6a**

**Fig 6b**

**Fig 6c**

**Fig 6d**

**EP 3 082 009 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2005263189 A1
- DE 29708831 U1
- GB 1403785 A
- US 2359111 A
- GB 563208 A